# EUROPÄISCHE PATENTSCHRIFT

(11) **EP 0 585 773 B1**
(45) Veröffentlichungstag und Bekanntmachung des Hinweises auf die Patenterteilung: **02.11.1995**
(21) Anmeldenummer: 93113454.8
(22) Anmeldetag: 24.08.1993
(51) Int. Cl.: B62D 33/06

(54) **Fahrerplattformaufhängung für Fahrzeuge**
Driver's cab suspension for vehicles
Suspension de cabine conducteur pour véhicules

(30) Priorität: 31.08.1992 DE 4228959
(43) Veröffentlichungstag der Anmeldung: 09.03.1994
(73) Patentinhaber: DEERE & COMPANY, Moline, Illinois 61265 (US)
(72) Erfinder: Höfle, Jörg Jens, D-64342 Jugenheim (DE)
(74) Vertreter: Feldmann, Bernhard

(56) Entgegenhaltungen:
- DE-A- 2 419 753
- DE-A- 2 548 749
- DE-C- 2 161 953
- FR-A- 1 317 892
- FR-A- 2 097 332
- GB-A- 2 244 745

## Beschreibung

Die Erfindung betrifft eine Fahrerplattformaufhängung für landwirtschaftliche oder industrielle Fahrzeuge mit wenigstens einem im wesentlichen horizontal und quer zur Fahrtrichtung ausgerichteten Drehstab, der zwischen der Fahrerplattform und dem Fahrzeugunterbau angeordnet ist, gemäß den Merkmalen des Oberbegriffs des Patentanspruchs 1.

Insbesondere bei relativ langsam fahrenden Fahrzeugen, wie Ackerschleppern und dergleichen, ist die Fahrerplattform, auf der eine Fahrerkabine oder ein Vierpfostenüberschlagschutz montiert sein kann, meist ungefedert oder lediglich über Puffer- oder Gummielemente am Fahrzeugrumpf befestigt (EP-A-0 099 526, EP-A-0 151 332). Diese Elemente sind wegen ihrer geringen Federwege nur zur Körperschallisolierung, nicht aber zur Federung der Fahrerplattform geeignet. Niederfrequente mechanische Schwingungen, die durch Fahrbahnunebenheiten angeregt werden, können ungedämpft auf den Befestigungspunkt des Fahrersitzes einwirken. Um ein gewisses Ausmaß an Fahrkomfort zu gewährleisten, werden die Hub-, Horizontal-, Quer- und Nickschwingungen durch einen gefederten Fahrersitz aufgenommen.

Aus ergonomischen Gründen sollte die Sitzfederung nicht zu weich ausgelegt werden, da dies die Federwege erhöht und zu relativ großen Relativbewegungen zwischen den Bedienungselementen und dem Fahrer führen kann. Der Fahrer kann daher bei stoßartigen Belastungen leicht den Kontakt zu den fahrerplattformfesten Bedienungselementen und Stellgliedern verlieren. Durch diese Einschränkungen für die Schwingungsisolation ergibt sich eine Sitzfederung, deren Resonanzfrequenz im Bereich der Resonanzfrequenzen einiger innerer menschlicher Organe liegen kann, was als unangenehm empfunden wird. Die Sitzfederung verhindert auch nicht die Schwingungseinleitung durch an der Fahrerplattform befestigte Bedienungselemente.

Aus den angeführten Gründen ist eine Federung der gesamten Fahrzeugkabine mit niederfrequenten Eigenschwingungen wünschenswert. Die auf den Fahrer einwirkenden mechanischen Schwingungen sollen verringert werden, so daß dem Fahrer eine längere tägliche Arbeitszeit mit dem Schlepper bei höheren Fahrzeuggeschwindigkeiten zugemutet werden kann, ohne daß gesundheitliche Beeinträchtigungen zu befürchten sind.

Die EP-B1-0 273 796 beschreibt eine elastische Federung für die Kabine eines landwirtschaftlichen Schleppers, bei der zwischen einem steifen Fahrwerk einerseits und mit der Kabine verbundenen Queraufbauten andererseits elastische Federbeine zur Aufnahme von Schwingungen vorgesehen sind. Diese Federung läßt auch Nickschwingungen um die Querachse zu, die dem Fahrer einen taumeligen Eindruck vermitteln und ihm die Beherrschung des Fahrzeuges erschweren können. Die bekannte Konstruktion erfordert eine Vielzahl von Panhardstäben zur Aufnahme von Horizontalkräften und ist relativ aufwendig. Ferner erweist sich die Abstimmung der Federelemente als schwierig.

Die DE-C-21 61 953 beschreibt die vordere Lagerung und Führung eines kippbaren Lastkraftwagen-Fahrerhauses, bei dem zwei den Kippvorgang unterstützende und zur Stabilisierung des Fahrerhauses beitragende Drehstäbe vorgesehen sind, die an ihren ersten Enden fest am Fahrzeugrahmen eingespannt sind und an ihren zweiten Enden mit Lagerböcken, die von den Fahrerhauslängsträgern abragen, über Zwischenelemente in Verbindung stehen. Die Zwischenelemente bestehen jeweils aus einem Hebel und einem Lenker, wobei am zweiten Ende des jeweiligen Drehstabes der Hebel befestigt ist und wobei der Lenker an seinem einen Ende mit dem Hebel in Verbindung steht und mit seinem anderen Ende am jeweiligen Lagerbock drehbar gelagert ist. Diese vor allem den Kippvorgang des Fahrerhauses unterstützende Ausbildung erfüllt jedoch noch nicht alle Anforderungen an eine befriedigende Fahrerplattformaufhängung.

Eine andere Kippvorrichtung für das Fahrerhaus von Lastwagen wird durch die DE-A-24 19 753 beschrieben. Hierbei ist das vordere Ende des Fahrerhauses um eine Kippachse auf einem Fahrgestellrahmen gelagert. Zum Kippen des Fahrerhauses ist eine Kippvorrichtung vorgesehen, die einen Hubzylinder enthält, dessen eines Ende am Fahrerhaus angelenkt ist. Es ist ferner ein Drehstab vorgesehen, der sich im wesentlichen über die ganze Breite des Fahrerhauses erstreckt und an einem seiner Enden einen außerhalb eines Kipplagers liegenden Schwenkarm enthält, an dem das andere Ende des Hubzylinders angelenkt ist. Zur federnden Abstützung des Hubzylinders trägt das freie Ende des Drehstabes außerhalb des anderen Kipplagers eine Halterung, die am Fahrgestellrahmen eingespannt ist. Auch diese Kippvorrichtung kann nicht alle Anforderungen an eine Fahrerplattformaufhängung erfüllen.

Die FR-A-1.317.892 bezieht sich auf eine elastische Aufhängung des Fahrerhauses von Lastwagen, welche die gattungsbildenden Merkmale aufweist. Die vordere Aufhängung des Fahrerhauses besteht aus Gummilagern mit relativ geringer Nachgiebigkeit. Die hintere Aufhängung besteht aus einer Drehstabfeder, die zur Aufnahme von Schwingungen geeignet sein soll. Die Drehstabfeder ist in der Fahrzeugmittellängsachse drehfest mit einem Widerlager verbunden, das am Fahrerhaus gelagert ist. An den beiden äußeren Enden der Drehstabfeder, die über Lager am Fahrerhaus gelagert sind, greifen nach hinten abragende Hebel an, deren Enden in auf dem Fahrzeugrahmen befestigten Gleitführungen verschiebbar gelagert sind. Durch diese für Lastwagen vorgesehene Fahrerhausaufhängung werden Nickbewegungen, wie sie insbesondere bei Ackerschleppern auftreten können, nicht immer befriedigend vermieden. Insbesondere lassen sich wegen der verschiebbaren Ausbildung der Hebellagerung die Schwingungen nicht auf eine Schwingungsebene, die durch die vertikale Fahrzeuglängsachse aufgespannt wird, beschränken.

Die der Erfindung zugrunde liegende Aufgabe wird darin gesehen, eine Fahrerplattformaufhängung der eingangs genannten Art anzugeben, die unter Vermeidung der genannten Probleme die Fahrerplattform weitgehend von Schwingungen des Fahrzeugunterbaus abkoppelt. Es sollen insbesondere die in der vertikalen Fahrzeuglängsebene auftretenden Schwingungen abgefedert werden, während die Abstützung der Querkräfte auf relativ steife Weise erfolgt.

Die Aufgabe wird ausgehend von dem Oberbegriff des Patentanspruchs 1 erfindungsgemäß durch dessen kennzeichnende Merkmale gelöst. Weitere vorteilhafte Ausgestaltungen und Weiterbildungen der Erfindung gehen aus den Unteransprüchen hervor.

Gemäß der Erfindung sind im wesentlichen horizontal und quer zur Fahrtrichtung ausgerichtete Drehstäbe vorgesehen, die zwischen der Fahrerplattform und dem ersten Ende jeweils eines Längslenkers drehfest eingespannt sind. Zur Einspannung dienen Festlager. In Einzelfällen können an Stelle der Festlager auch isolierende Lager zweckmäßig sein. Das zweite Ende des jeweiligen Längslenkers ist über eine Schwenkachse, die parallel zum Drehstab ausgerichtet ist, am Fahrzeugunterbau angelenkt. Der Längslenker kann über eine Konsole oder dergleichen, beispielsweise an einem Fahrzeugrahmen, einem Getriebegehäuse oder einem Achsschenkelgehäuse befestigt sein. Der beidseits eingespannte Drehstab ist dreh- und biegesteif und wird auf Torsion beansprucht.

Diese Verwendung von Längslenkerelementen beschränkt die Anzahl der Freiheitsgrade der Fahrerplattform auf eine Schwingungsebene, die vertikal in der Schlepperlängsachse aufgespannt ist. Je nach Winkelstellung der Lenker können so Vertikal-, Horizontal- und in Fahrtrichtung gerichtete Nickschwingungen isoliert werden. Eine Abfederung von Querschwingungen mit den genannten Nachteilen unterbleibt weitgehend.

Für die Bekämpfung von Schwingungen in lateraler Richtung, also für Quer-Wankschwingungen, können ergänzende Maßnahmen ergriffen werden. Hier bieten sich neben einer Federung der Fahrerplattform durch Pufferelemente auch horizontale und laterale Sitzfederungen an. Von der Einführung solcher zusätzlicher Freiheitsgrade kann jedoch bewußt abgesehen werden, um erstens die zum Erkennen des Fahrverhaltens erforderliche Rückwirkung des Fahrzeuges auf den Fahrer zu gewährleisten und zweitens Kinetosen (Seekrankheit) zu vermeiden, die vor allem auf Quer- und Rollschwingungen zurückgeführt werden.

Der Erfindung zufolge stützt sich die Drehstabachse in der Nähe seiner Einspannung im Längslenker über eine die Verdrehung des Drehstabes zulassende Lagerstelle an der Fahrerplattform ab. Durch die Stützwirkung der Lagerstelle ist der Drehstab an der Fahrerplattform aufgehängt. Die Lagerstelle kann beispielsweise als Gleitpaarung ausgebildet sein.

Für eine symmetrische Abstützung der Fahrerplattform sind zweckmäßigerweise auf beiden Seiten der Fahrerplattform gleich viele Längslenker angelenkt, die je einen zugehörigen Drehstab tragen. Die Drehstäbe sind parallel zueinander ausgerichtet. Drehstäbe, die zwei sich im wesentlichen gegenüberliegenden Längslenkern zugeordnet sind, fluchten miteinander, oder liegen zumindest räumlich nahe beieinander.

Vorzugsweise ist auf jeder Längsseite der Fahrerplattform ein vorderer und ein hinterer Längslenker angeordnet, die je einen Drehstab tragen. Für die Abstützung schwererer Fahrerplattformen mit Aufbau kann auch die Verwendung von mehr als insgesamt vier Längslenkern mit den zugehörigen vier Drehstäben zweckmäßig sein.

Das Momentanzentrum der Schwingung ergibt sich als Schnittpunkt der Verlängerung der vorderen und hinteren Lenkerachse. Dabei stellt das Momentanzentrum einen virtuellen Drehpunkt für die Fahrerplattform dar.

Bei hintereinander liegenden gleich langen und parallelen Längslenkern liegt das Momentanzentrum im Unendlichen, was einer unendlich langen Schwinge gleichkommt. Diese Anordnung der Längslenker zwingt die Schlepperkabine im wesentlichen zur Bewegung einer Parallelschwinge.

Durch eine nicht parallele Ausrichtung hintereinander liegender Längslenker und/oder durch Verwendung unterschiedlich langer Längslenker läßt sich das Momentanzentrum auch ins Endliche legen. Es kann um die horizontale Schwerpunktebene der Fahrerplattform, gegebenenfalls mit Kabinenaufbau, orientiert werden, was ein relativ neutrales Verhalten bei horizontalen Trägheitskräften, welche beim Bremsen und Beschleunigen auftreten, bedingt. Die Verwendung unterschiedlich langer Längslenker führt zu einer Überlagerung von Translations- und Nickschwingungen. Hierbei wandert die Lage des Momentanzentrums aus ihrer Ruhestellung aus.

Vorzugsweise schließt bei statischer Einfederung die Ausrichtung des Längslenkers (genauer die Verbindungslinie zwischen der Einspannstelle des Drehstabes und der Schwenkachse) zur Horizontalen einen Winkel zwischen 0° und 30° ein. Die statische Einfederung ist durch die Lage definiert, die im Ruhezustand ohne dynamische Einflüsse eingenommen wird. Unter welchen Winkeln die Längslenker schräg nach oben oder unten ausgerichtet werden und ob die Längslenker mit ihren vorderen oder hinteren Enden an dem Fahrzeugunterbau angelenkt werden, richtet sich nach den konkreten Anforderungen.

Bei flach ausgerichteten Längslenkern bewegt sich die Fahrerplattform infolge von Schwingungen fast ausschließlich in vertikaler Richtung, während bei gegenüber der Horizontalen geneigten Längslenkern die vertikale Bewegung durch eine Bewegung in Fahrzeuglängsrichtung überlagert ist.

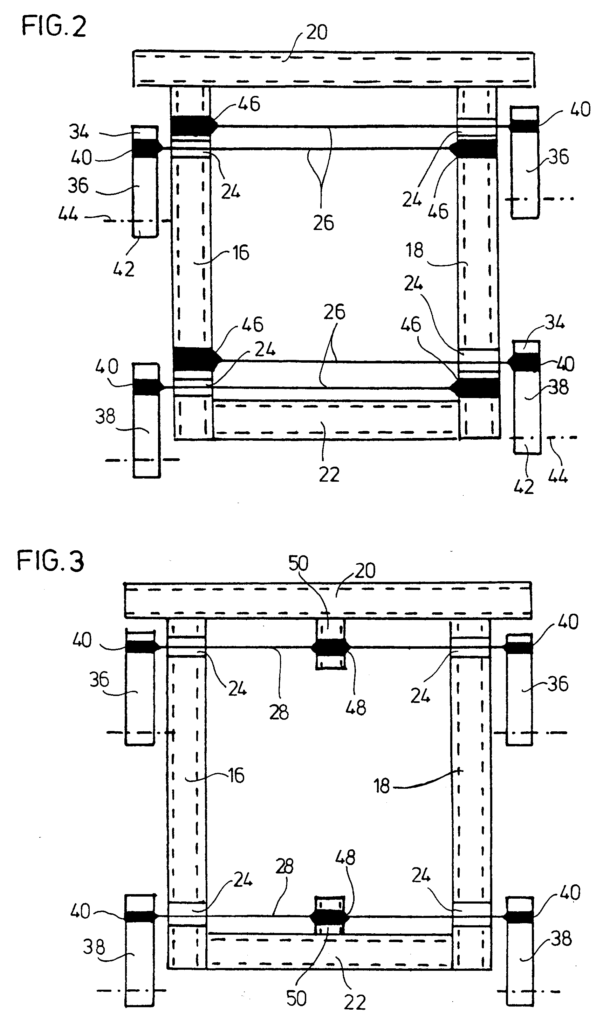

Zur Anordnung der Drehstäbe können verschiedene in den Figuren 2 bis 4 gezeigte bevorzugte Prinzipien dienen, bei denen die Fahrerplattform zwei seitliche, in Fahrtrichtung ausgerichtete Rahmenteile aufweist, und die Lagerstellen zur Aufhängung der Drehstäbe sich jeweils an einem der seitlichen Rahmenteile befinden.

Gemäß einer ersten Anordnung (Fig. 2) sind die Drehstäbe mit dem seitlichen Rahmenteil drehfest verbunden, das dem seitlichen Rahmenteil gegenüberliegt, an welchem seine Lagerstelle und sein zugehöriger Längslenker angeordnet sind. Die Drehstäbe sind hierbei paarweise eng hintereinander angeordnet.

Bei einer zweiten Anordnung (Fig. 3) ist jeder Drehstab als durchgehender, zwischen zwei äußeren Längslenkern eingespannter Stab ausgebildet, dessen äußere Abschnitte miteinander fluchten und an den seitlichen Rahmenteilen der Fahrerplattform abgestützt sind. Der mittlere Bereich des Drehstabes ist in einem mittleren Rahmenteil der Fahrerplattform drehfest eingespannt. Statt durchgehender, in der Mitte eingespannter Drehstäbe können jedoch auch zweiteilige Drehstäbe verwendet werden, die mit den mittleren Rahmenteilen drehfest verbunden sind.

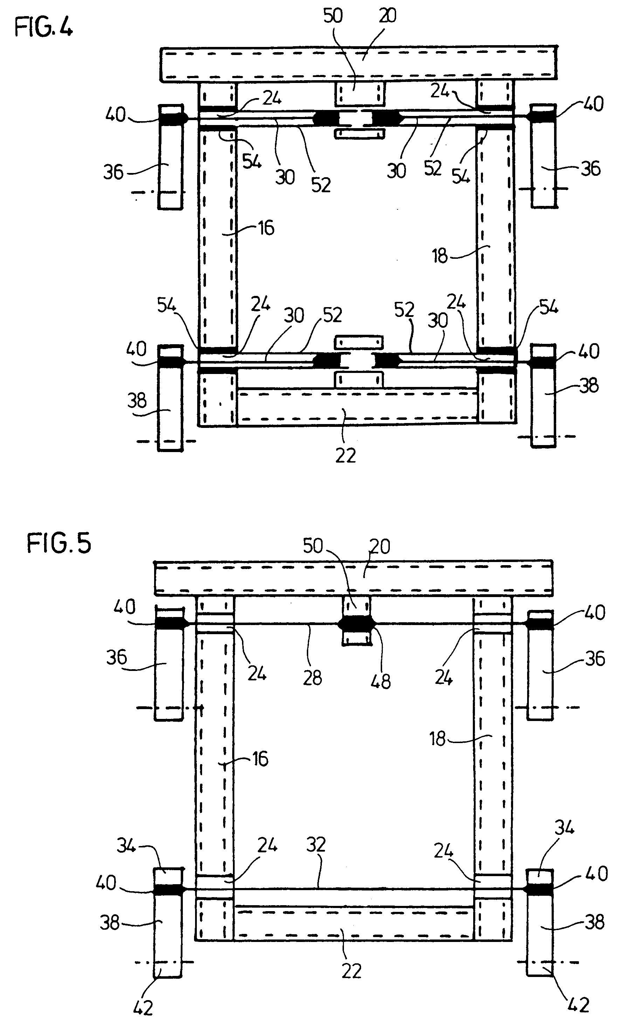

Eine weitere Anordnung (Fig. 4) sieht vor, daß sich jeder Drehstab durch ein zugehöriges Torsionsrohr erstreckt und daß das Torsionsrohr mit seinem einem Ende mit dem Rahmenteil und mit seinem anderen Ende mit dem Drehstab drehfest verbunden ist. Der Drehstab und das Torsionsrohr liegen konzentrisch zueinander und sind in der Fahrerplattformmitte gelagert. Das seitlich aus dem Torsionsrohr herausragende Ende des Drehstabes ist drehfest mit dem zugehörigen Längslenker verbunden. Die Federsteifigkeiten des Drehstabes und des Torsionsrohres sind hintereinander geschaltet. Durch ihre jeweilige Auslegung läßt sich die Gesamtfederkennlinie in weiten Grenzen modifizieren.

Sollen Quer- oder Wankbewegungen freigemacht werden, so müssen Freiheitsgrade in Querrichtung zugelassen werden. Um die hierbei auftretenden Querkräfte abfangen zu können, ist vorzugsweise ein weiterer, im wesentlichen horizontal und quer zur Fahrtrichtung ausgerichteter Drehstab vorgesehen, der zwischen den ersten Enden zweier auf hinsichtlich der Fahrtrichtung gegenüberliegenden Seiten der Fahrerplattform angeordneten Längslenkern drehfest eingespannt ist. Die jeweils zweiten Enden der Längslenker sind um eine zur Drehstabachse parallele Achse schwenkbar am Fahrzeugunterbau angelenkt. Ferner stützt sich die Drehstabachse in der Nähe jedes der beiden Längslenker über Lagerstellen an der Fahrerplattform ab.

Durch diese Verbindung zweier sich in Fahrzeugquerrichtung gegenüberliegender Längslenker mittels eines sich an der Fahrerplattform abstützenden Drehstabs können Querkräfte abgefedert werden. Dies hat eine Stabilisatorwirkung zur Folge. Diese Ausgestaltung kann insbesondere neben der Lösung des Hauptpatentanspruches angewendet werden, so daß sich die Hubfederwirkung und die Querfederwirkung überlagern.

Ferner ist es von Vorteil, einen sich im wesentlichen quer zur Fahrtrichtung erstreckenden Panhardstab vorzusehen, der zwischen der Fahrerplattform und dem Fahrzeugunterteil angeordnet ist. Der Panhardstab wird lediglich auf Zug- und Druckkräfte beansprucht. Er liegt vorzugsweise in der Schwerpunktebene unter der Fahrerplattform und übernimmt bei Wankbewegungen die Abstützung der Querkräfte, so daß eine seitliche Auswanderung der Fahrerplattform vermieden wird.

Das Loslager zwischen dem Längslenker und dem Fahrzeugunterbau hat eine Stützfunktion und läßt ein Verschwenken des Längslenkers gegenüber dem Fahrzeugunterbau zu. Zur Isolierung von Körperschall werden bevorzugt Gummi-Metall-Elemente eingesetzt. Vorzugsweise sind solche Silent-Elemente am unteren Aufstandspunkt der Längslenker, also chassisseitig, vorgesehen. Die Gummilager können auch auf gezielte, wenn auch geringe, laterale Weichheit abgestimmt werden, um Querkräfte federnd abzufangen.

Bei ihrer Auslegung sollte die Steifigkeit der Silent-Elemente bezüglich ihrer Schwenkachse in radialer und axialer Richtung je nach Bauart selektiert werden. Hierzu wird vorzugsweise eine integrierte Lösung mit am Längslenker anvulkanisierten Gummigelenken oder eine Lenkerlagerung mit gegeneinander verspannten Flanschblöcken verwendet.

Zur Begrenzung der Relativbewegungen zwischen Fahrerplattform und Fahrzeugunterbau sind vorzugsweise Endanschläge vorgesehen, bei denen es sich um Gummipuffer oder Puffer aus handelsüblichen Elastomeren, z. B. auf Pu-Basis, handeln kann. Die Endanschläge können an den Längslenkern befestigt sein. Ihre Pufferwirkung kann durch die Ausnutzung von Hebelverhältnissen der Längslenker vergrößert werden. Mit ihrer Hilfe läßt sich eine progressive Federkennliniengestaltung in weiten Bereichen realisieren.

Zwischen der Fahrerplattform und dem Fahrzeugunterbau werden vorzugsweise Dämpfer angeordnet, die beidseits der Fahrerplattform in deren Schwerpunktebene liegen können. Als Dämpfer eignen sich die im Kraftfahrzeugbau üblichen Stoßdämpfer. Durch die kinematische Zwangsführung der Längslenker läßt sich die Anzahl der Dämpfer gegenüber konventionellen Fahrerplattformaufhängungen reduzieren.

Vorzugsweise sind die drehfesten Einspannungen zwischen den Drehstäben und der Fahrerplattform bzw. den Längslenkern lösbar ausgebildet. Nach Lösen der Einspannungen läßt sich die Fahrerplattform anheben, wobei die Längslenker in den Zenit schwenken. Die angehobene Fahrerplattform gibt den Zugang zu unter ihr liegenden Fahrzeugkomponenten frei und erleichtert Servicearbeiten. Bevor Arbeiten unter der Fahrerplattform ausgeführt werden, wird aus Sicherheitsgründen zweckmäßigerweise die Fahrerplattform in ihrem angehobenen Zustand gegen ungewolltes Absenken durch geeignete Maßnahmen gesichert.

Das Anheben der Fahrerplattform kann durch einen Wagenheber oder andere Hilfsmittel erfolgen. Vorzugsweise bedient man sich hierzu jedoch einer bereits am Fahrzeug vorhandenen Kraftquelle, deren Kraft durch ein Übertragungsgestänge oder dergleichen auf die Fahrerplattform übertragen wird.

Anhand der Zeichnung, die Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die Seitenansicht einer erfindungsgmäßen Lagerung einer Fahrerkabine auf einem Ackerschlepperchassis,
- Fig. 2 bis 5: verschiede Varianten für Drehstabanordnungen,
- Fig. 6 bis 8: Schnittdarstellungen verschiedener Varianten für Schwenklager,
- Fig. 9: die Anordnung eines Panhardstabes,
- Fig. 10: die Seitenansicht eines Ackerschleppers mit angehobener Kabine und
- Fig. 11: eine Hebevorrichtung für die Kabine.

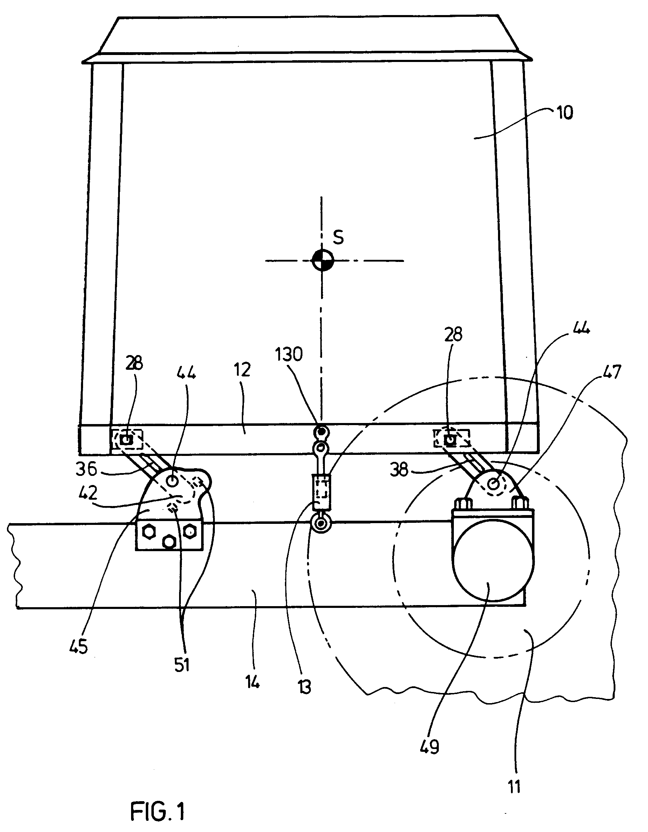

In der Fig. 1 ist schematisch ein Hinterrad 11 des Fahrzeuges dargestellt, das ein Ackerschlepperchassis, auch Fahrzeugunterbau 14 genannt, trägt. Oberhalb des Fahrzeugunterbaus 14 befindet sich eine Fahrerplattform 12, auf der eine Kabine 10 aufgebaut ist. Der Fahrzeugunterbau 14 und die Fahrerplattform 12 sind durch beidseits der Kabine 10 angeordnete vordere und hintere Längslenker 36, 38 und Dämpfer 13 verbunden. Ferner ist in Fig. 1 ein Panhardstab 130 angedeutet, der mit den Dämpfern 13 in einer vertikalen, quer zur Fahrtrichtung aufgespannten Ebene liegt, in der sich der Schwerpunkt S der Kabine 10 befindet.

Die Bodenstruktur der Fahrerplattform 12 ist in den Fig. 2 bis 5, in denen sich entsprechende Bauteile mit den selben Bezugsziffern belegt wurden, in Aufsicht angedeutet. Sie bildet eine Rahmenstruktur und besteht im wesentlichen aus vier rechtwinklig zueinander angeordneten rohrförmigen Trägern, nämlich aus zwei seitliche Rahmenteilen 16, 18, einem vorderen Rahmenteil 20 und einem hinteren Rahmenteil 22. Die seitlichen Rahmenteile 16, 18 sind durchbohrt. In die Bohrungen sind Lagerstellen 24 für Drehstäbe 26, 28, 32 eingesetzt. Die nicht näher dargestellten Lagerstellen 24 stützen die Drehstäbe 26, 28, 32 gegenüber der Fahrerplattform 12 ab, lassen jedoch eine Verdrehung der Drehstäbe 26, 28, 32 zu.

Das nach außen aus der Lagerstelle 24 herausragende Ende jedes Drehstabes 26, 28, 30, 32 ist in ein erstes Ende 34 eines dreh- und biegefesten Längslenkers 36, 38 durch Festlager drehfest eingespannt oder auf andere Weise befestigt. An Stelle des Festlagers 40 kann in Einzelfällen auch ein isolierendes Lager verwendet werden. Das andere, zweite Ende 42 des Längslenkers 36, 38 ist über ein Loslager mit dem in den Fig. 2 bis 5 nicht dargestellten Fahrzeugunterbau 14 verbunden. Das Loslager ermöglicht ein Verschwenken des Längslenkers 36, 38 um eine parallel zu den Drehstabachsen ausgerichtete Schwenkachse 44. Die vorderen Längslenker 36 können sich über Konsolen 45 an dem Fahrzeugchassis oder einem Getriebegehäuse und die hinteren Längslenker 38 können sich über Konsolen 47 an den Achstrichtern 49 des Ackerschleppers abstützen.

An den vorderen Konsolen sind seitlich neben dem verlängert ausgebildeten zweiten Ende 42 der vorderen Längslenker 36 Gummiklötze 51 befestigt, die als Anschläge dienen und den Schwenkweg der vorderen Längslenker 36 begrenzen.

Für die Befestigung des jeweils anderen, nicht in einem Festlager 40 eines Längslenkers 36, 38 eingespannten Endes der Drehstäbe 26, 28, 30, 32 sind in den Fig. 2 bis 5 unterschiedliche Varianten dargestellt.

Gemäß Fig. 2 ist das andere Ende jedes Drehstabes 26 in dem jeweils gegenüberliegenden seitlichen Rahmenteil 16, 18 mittels eines Festlagers 46 eingespannt. Es werden bei dieser Variante vier Drehstäbe 26 verwendet, von denen jeweils zwei vordere und zwei hintere eng hintereinander liegen.

Die zweite, in Fig. 3 dargestellte Variante weist einen vorderen und einen hinteren Drehstab 28 auf. Jeder Drehstab 28 ist mit seinen beiden Enden in je einem Festlager 40 der außerhalb der seitlichen Rahmenteile 16, 18 angeordneten Längslenker 36, 38 eingespannt und stützt sich über die Lagerstellen 24 an den seitlichen Rahmenteilen 16, 18 ab. Der mittlere Bereich jedes Drehstabes 28 ist über ein Festlager 48 drehfest mit einem mittleren Rahmenteil 50 verbunden. Jeder Drehstab 28 kann auch aus zwei gesonderten Teilstäben bestehen, die miteinander fluchten und in dem mittleren Rahmenteil 50 eingespannt sind.

Bei einer dritten, in Fig. 4 dargestellten Variante sind an jedem der seitlichen Rahmenteile 16, 18 je zwei sich ins Rahmeninnere erstreckende Torsionsrohre 52 über eine drehfeste Verbindung 54 befestigt. Die Torsionsrohre 52 sind mit ihrem freien, ins Rahmeninnere weisende Ende in einem mittleren Rahmenteil 50 drehbar gelagert. Innerhalb jedes Torsionsrohres 52 erstreckt sich konzentrisch ein Drehstab 30, dessen eines Ende über eine drehfeste Einspannung 40 an einem Längslenker 36, 38 und dessen anderes Ende drehfest an dem freien, drehbar im mittleren Rahmenteil 50 gelagerten Ende des zugehörigen Torsionsrohres 52 drehfest eingespannt ist.

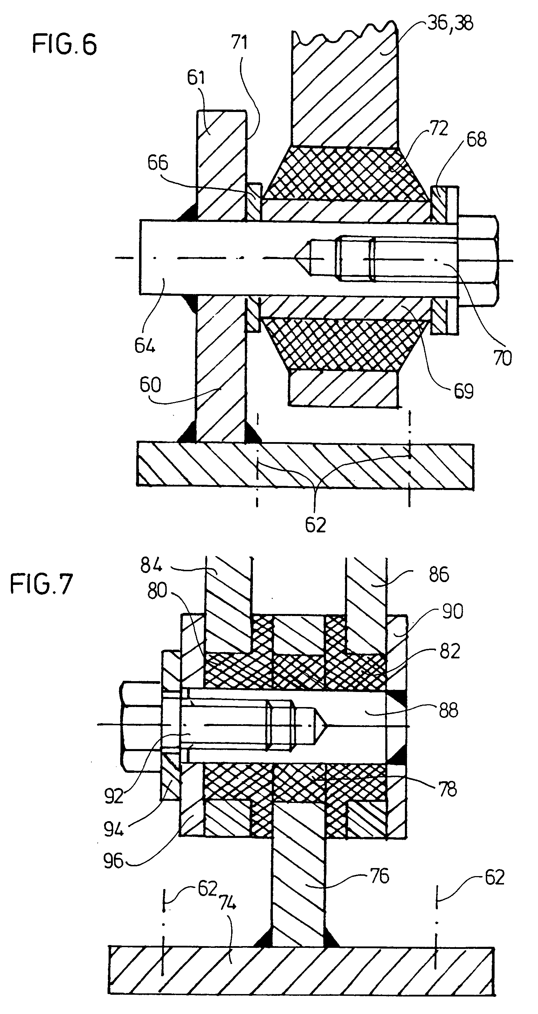

Die in Fig. 5 dargestellte Variante enthält einen ersten, vorderen Drehstab 28, der wie die Drehstäbe 28 der Fig. 3 zwischen den beiden äußeren Längslenkern 26 und einem mittleren Rahmenteil 50 drehfest eingespannt ist, während ein zweiter, hinterer Drehstab 32 lediglich zwischen zwei äußeren Längslenkern 38 eingespannt ist. Der erste Drehstab 28 nimmt Hubfederkräfte auf. Der zweite Drehstab 32 hat eine Stabilisatorwirkung und dient der Aufnahme von Wankbewegungen. Der zweite Drehstab 32 kann auch in Verbindung mit einer oder mehreren Drehstabanordnungen der in den Figuren 2 bis 4 dargestellten Art verwendet werden.

Bei einer Auf- und Abbewegung der Fahrerplattform 12 mit der darauf aufgesetzten Fahrerkabine 10 werden die Längslenker 36, 38 um ihre Schwenkachsen 42 verdreht. Hierbei tordieren die Drehstäbe 26, 28, 30 und gegebenenfalls die Torsionsrohre 52, was zu einer Abstützung und Abfederung der Kabine 10 führt. Bei einem seitlichen Verkippen der Fahrerplattform 12 schwenken die beiden hinteren Längslenker 38 der Fig. 5 gegen die Torsionskraft des Drehstabes 32 unterschiedlich weit aus. Die Torsionskraft bewirkt hier eine Rückstellkraft gegen ein seitliches Verkippen.

Aus Fig. 6 geht eine L-förmige Konsole 60 hervor, die mittels Schrauben 62, von denen lediglich die Mittellinien dargestellt wurden, am nicht dargestellten Fahrzeugrahmen oder Getriebegehäuse festschraubbar sind. An dem sich senkrecht nach oben erstreckenden Schenkel 61 der Konsole 60 ist eine Achse 64 festgeschweißt. Die Achse 64 nimmt zwei Gleitscheiben 66, 68 und eine dazwischen liegende Hülse 69 auf, die durch einen Bolzen 70 gegen eine Seitenfläche 71 des senkrechten Schenkels 61 der Konsole 60 festgespannt sind. An der Mantelfläche der Hülse 69 liegt ein an dem Längslenker 36, 38 anvulkanisiertes Gummi-Augengelenk 72 an, welches zwischen den Gleitscheiben 66, 68 um die Achse 64 drehbar gelagert ist. Der in Fig. 6 dargestellte Lagerbock läßt eine Verdrehung des Längslenkers 36, 38 zu und nimmt in gewissen Grenzen Wankschwingungen zwischen Fahrzeugunterbau 14 und Fahrerplattform 12 auf.

Die Fig. 7 zeigt eine andere Variante für einen Lagerbock. Hierbei ist eine T-förmige Konsole 74 mit dem Fahrzeugunterbau 14 verschraubbar. Der senkrecht nach oben stehende mittlere Schenkel 76 der Konsole 74 weist eine Bohrung auf, die eine elastische Hülse 78 aufnimmt. Beidseits der Hülse 78 ist je ein Gummi-Flansch 80, 82 angeordnet. Jeder Gummi-Flansch 80, 82 trägt einen Schenkel 84, 86 eines zweispannig ausgeführten Längslenkers 36, 38. Durch Bohrungen in der Hülse 78 und den Gummi-Flanschen 80, 82 erstreckt sich eine Achse 88, an deren einer Seite eine Scheibe 90 angeschweißt ist. Durch einen Bolzen 92 mit Unterlegscheibe 94 werden die Hülse 78 und die Gummi-Flansche 80, 82 zwischen der angeschweißten Scheibe 90 und einer weiteren Scheibe 96 eingespannt. Auch dieser Lagerbock läßt eine Verdrehung des Längslenkers zu und nimmt Wankschwingungen auf.

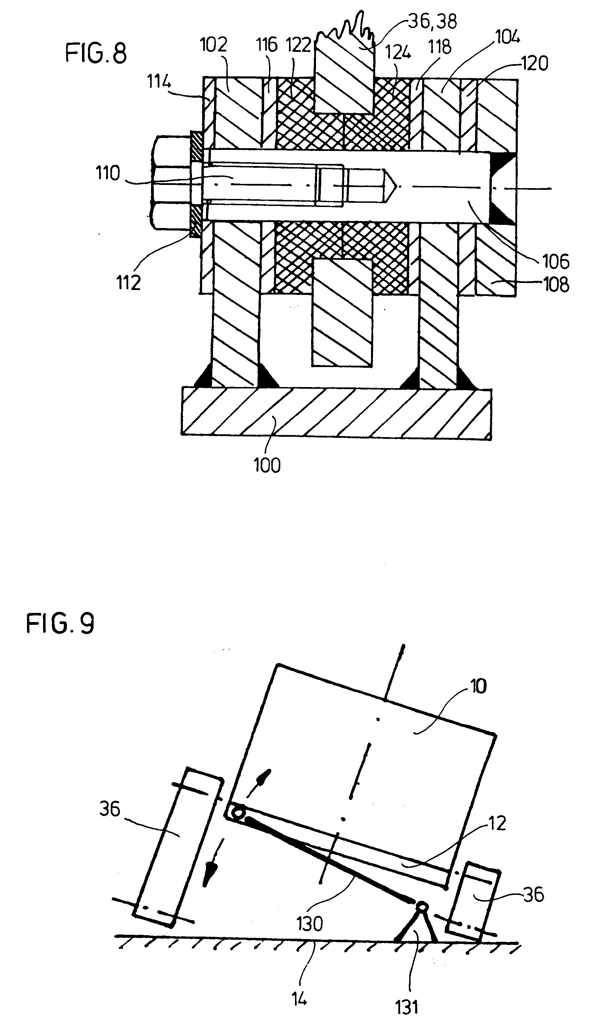

Die in Fig. 8 dargestellte Variante für einen Lagerbock enthält eine U-förmige Konsole 100 mit nach oben stehenden Schenkeln 102, 104, in denen sich Bohrungen zur Aufnahme einer Querachse 106 befinden. An einem Ende der Querachse 106 ist eine Scheibe 108 festgeschweißt. In das der Scheibe 108 gegenüberliegende Ende der Achse 106 ist ein Bolzen 110 eingeschraubt, der mit einer Unterlegscheibe 112 die beiden Schenkel 102, 104 der Konsole 100 zwischen der festgeschweißten Scheibe 108 und der Unterlegscheibe 112 einspannt. Auf beiden Seiten jedes Schenkels 102, 104 ist je eine Gleitscheibe 114, 116, 118, 120 angeordnet. Zwischen den mittleren Gleitscheiben 116, 118 sind zwei elastische Flanschblöcke 122, 124 eingespannt. Ein Längslenker 36, 38 ist zwischen den beiden Flanschblöcken 122, 124 eingespannt und wird von diesen getragen. Die Gleitscheiben 114, 116, 118, 120 vermindern die Reibung beim Drehen des Längslenkers 36 um die Achse 106. Der Lagerbock gemäß Fig. 8 weist eine hohe Übertragungsfähigkeit von Kräften in Lenkerlängsrichtung und eine geringe Querelastizität auf.

Bei Wankbewegungen kann die Abstützung der Querkräfte ein Panhardstab 130 übernehmen, der lediglich auf Zug- und Druckkräfte beansprucht wird. Die Anordnung des Panhardstabes 130 geht aus Fig. 9 hervor, die eine Teilansicht des Fahrzeuges von hinten darstellt. Beidseits der Fahrerplattform 12, die die Kabine 10 trägt, ist je ein vorderer Längslenker 36 angeordnet. Die beiden Längslenker 36 sind infolge einwirkender Querkräfte unterschiedlich stark ausgelenkt, wodurch sie in der Ansicht von hinten unterschiedlich lang erscheinen. Der Panhardstab 130 ist mit seinem einen Ende an einer Seite der Fahrerplattform 12 angelenkt. Sein anderes Ende ist auf der gegenüberliegenden Seite des Fahrzeuges über eine Konsole 131 am Fahrzeugunterbau 14 angelenkt.

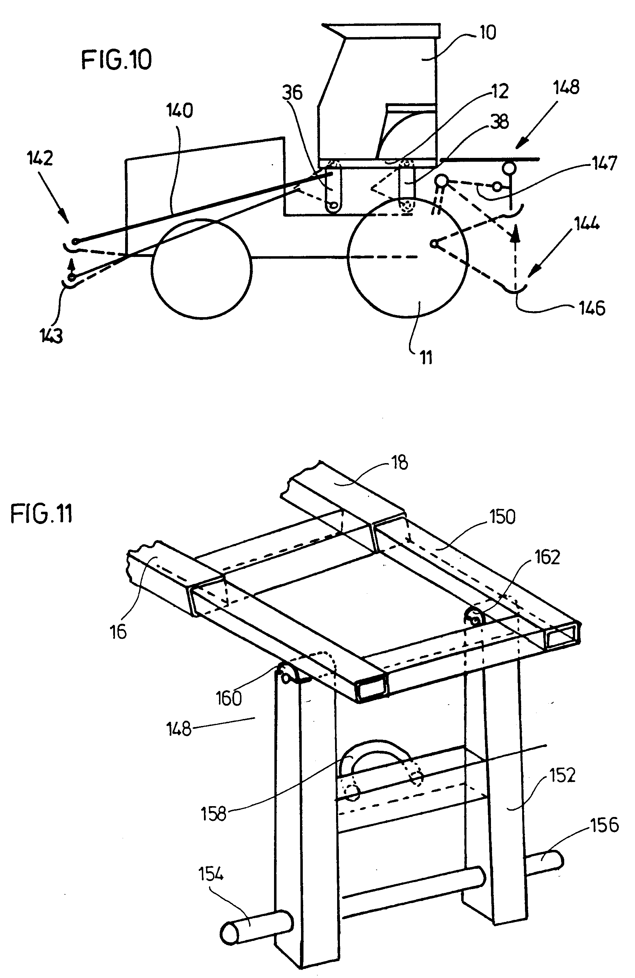

Werden die drehfesten Einspannungen 40 der Drehstäbe 26, 28, 30 in den Längslenkern 36, 38 oder die drehfesten Verbindungen 46, 48 zwischen den Drehstäben 26, 28, 30 und den seitlichen oder mittleren Rahmenteilen 16, 18, 50 gelöst, so lassen sich die Längslenker 36, 38 um ihre Schwenkachsen 42 verdrehen und nach oben aufstellen, ohne daß die Drehstäbe 26, 28, 30 und gegebenenfalls die Torsionsrohre 52 tordieren. Dabei wird die Fahrerplattform 12 angehoben, so daß der Zugang zu unter der Fahrerplattform 12 liegenden Fahrzeugkomponenten frei wird. Eine senkrechte Aufstellung der Längslenker 36, 38 ist in Fig. 10 dargestellt. Ferner ist angedeutet, daß das Verdrehen der vier Längslenker 36, 38 und das Anheben der Fahrerplattform 12 über ein Gestänge 140 von den fernbetätigbaren Hubarmen 143 einer Anhebevorrichtung 142 am vorderen Fahrzeugende oder durch eine von einer hinteren Anhebevorrichtung 144 mit Unterlenker 146 und Oberlenker 147 betätigbaren Hebevorrichtung 148 vorgenommen werden kann.

Eine geeignete Hebevorrichtung 148 geht aus Fig. 11 hervor. In nach hinten offenen Öffnungen der rohrförmigen seitlichen Rahmenteile 16, 18 der Fahrerplattform 12 ist ein sich horizontal erstreckender erster Hilfsrahmen 150 einschiebbar. Ein zweiter Hilfsrahmen 152 stützt den ersten Hilfsrahmen 150 ab und überträgt die Hubbewegung des Oberlenkers 147 auf den ersten Hilfsrahmen 150 und damit auch auf die Fahrerplattform 12. Der zweite Hilfsrahmen 152 weist nach außen vorstehende Tragschäfte 154, 156 auf, über die er sich an den beiden Unterlenkern 146 abstützt. In eine Öse 158 des zweiten Hilfsrahmens 152 wird der Oberlenker 147 eingehängt. Der zweite Hilfsrahmen 152 trägt oben zwei zylindrische Rollen 160, 162 zur Ausgleichung horizontaler Relativbewegungen.

Auch wenn die Erfindung lediglich anhand einiger Ausführungsbeispiele beschrieben wurde, erschließen sich für den Fachmann im Lichte der vorstehenden Beschreibung viele verschiedenartige Alternativen, Modifikationen und Varianten, die unter die vorliegende Erfindung fallen.

## Patentansprüche

1. Fahrerplattformaufhängung für landwirtschaftliche oder industrielle Fahrzeuge mit wenigstens einem im wesentlichen horizontal und quer zur Fahrtrichtung ausgerichteten Drehstab (26, 28, 30), der zwischen der Fahrerplattform (12) und dem Fahrzeugunterbau (14) angeordnet ist, wobei
- ein Teilabschnitt des Drehstabs (26, 28, 30), insbesondere eines seiner Enden oder sein mittlerer Bereich an der Fahrerplattform (12) drehfest eingespannt ist,
- eine Lagerstelle (24) an der Fahrerplattform (12) vorgesehen ist, über die sich der Drehstab (26, 28, 30) im Bereich seines wenigstens einen hinsichtlich der Einspannstelle freien Endes verdrehbar abstützt und
- das wenigstens eine freie Ende des Drehstabs (26, 28, 30) an dem ersten Ende (34) eines Längslenkers (36, 38) drehfest eingespannt ist,
dadurch gekennzeichnet, daß wenigstens im vorderen Bereich sowie im hinteren Bereich der Fahrerplattform (12) je wenigstens ein an der Fahrerplattform (12) drehfest eingespannter Drehstab (26, 28, 30), an dessen freiem Ende das erste Ende (34) eines Längslenkers (36, 38) drehfest eingespannt ist, angeordnet ist und daß das jeweils zweite Ende (42) des Längslenkers (36, 38) um eine im wesentlichen zur Drehstabausrichtung parallele Schwenkachse (44) schwenkbar am Fahrzeugunterbau (14) angelenkt ist.

2. Fahrerplattformaufhängung nach Anspruch 1, dadurch gekennzeichnet, daß an dem Fahrzeugunterbau (14) im Bereich der beiden Längsseiten (16, 18) der Fahrerplattform (12) je wenigstens ein Längslenker (36, 38) angelenkt ist, und daß an den ersten Enden (34) der Längslenker (36, 38) je ein Drehstab (26, 28) drehfest eingespannt ist.

3. Fahrerplattformaufhängung nach Anspruch 1 oder 2, dadurch gekennzeichnet, daß im Bereich jeder Längsseite (16, 18) der Fahrerplattform (12) ein vorderer und ein hinterer, je einen Drehstab (26, 28, 30) tragender Längslenker (36, 38) angeordnet ist.

4. Fahrerplattformaufhängung nach Anspruch 3, dadurch gekennzeichnet, daß die vorderen und hinteren Längslenker (26, 28) unterschiedliche Längen aufweisen.

5. Fahrerplattformaufhängung nach einem der Ansprüche 1 bis 4, dadurch gekennzeichnet, daß die Verbindungslinie auf dem Längslenker (36, 38), die sich zwischen der Einspannstelle (40) des Drehstabes (26, 28, 30) und der Schwenkachse (44) erstreckt, bei statischer Einfederung zur Horizontalen einen Winkel zwischen 0° und 30° einnimmt.

6. Fahrerplattformaufhängung nach einem der Ansprüche 1 bis 5, dadurch gekennzeichnet, daß die Fahrerplattform (12) zwei seitliche, in Fahrtrichtung ausgerichtete Rahmenteile (16, 18) aufweist, und daß die Lagerstelle (24) an einem seitlichen Rahmenteil (16, 18) angreift und der Drehstab (26) mit dem gegenüberliegenden seitlichen Rahmenteil (16, 18) drehfest verbunden ist.

7. Fahrerplattformaufhängung nach einem der Ansprüche 1 bis 5, dadurch gekennzeichnet, daß die Fahrerplattform (12) wenigstens ein seitliches, in Fahrtrichtung ausgerichtetes Rahmenteil (16, 18) und ein dazwischen liegendes mittleres Rahmenteil (50) aufweist, daß die Lagerstelle (24) an dem seitlichen Rahmenteil (16, 18) angreift und daß der Drehstab (28) mit dem mittleren Rahmenteil (50) drehfest verbunden ist.

8. Fahrerplattformaufhängung nach einem der Ansprüche 1 bis 5, dadurch gekennzeichnet, daß die Fahrerplattform (12) wenigstens ein seitliches, in Fahrtrichtung ausgerichtetes Rahmenteil (16, 18) aufweist, daß die Lagerstelle (24) an dem seitlichen Rahmenteil (16, 18) angreift, daß sich der Drehstab (30) durch ein Torsionsrohr (52) erstreckt und daß das Torsionsrohr (52) mit seinem einen Ende mit dem Rahmenteil (16, 18) und mit seinem anderen Ende mit dem Drehstab (30) drehfest verbunden ist.

9. Fahrerplattformaufhängung nach einem der Ansprüche 1 bis 8, dadurch gekennzeichnet, daß ein weiterer, im wesentlichen horizontal und quer zur Fahrtrichtung ausgerichteter Drehstab (32) vorgesehen ist, der zwischen den ersten Enden (34) zweier auf gegenüberliegenden Längsseiten der Fahrerplattform (12) angeordneten Längslenker (38) drehfest eingespannt ist, wobei die zweiten Enden (42) der Längslenker (38) um eine zur Drehstabausrichtung parallele Achse (44) schwenkbar am Fahrzeugunterbau (14) angelenkt sind, und daß der Drehstab (32) in der Nähe jedes der beiden Längslenker (36, 38) über Lagerstellen (24) an der Fahrerplattform (12) abgestützt ist.

10. Fahrerplattformaufhängung nach einem der Ansprüche 1 bis 9, dadurch gekennzeichnet, daß zwischen der Fahrerplattform (12) und dem Fahrzeugunterteil (14) wenigstens ein sich im wesentlichen quer zur Fahrtrichtung erstreckender Panhardstab (130) angeordnet ist.

11. Fahrerplattformaufhängung nach einem der Ansprüche 1 bis 10, dadurch gekennzeichnet, daß die als Schwenkachse (44) ausgebildete Verbindung zwischen Längslenker (36, 38) und einer am Fahrzeugunterteil (14) angeordneten Konsole (45, 47, 60, 74, 100) mit einem Silent-Element ausgebildet ist.

12. Fahrerplattformaufhängung nach Anspruch 11, dadurch gekennzeichnet, daß das Silent-Element ein am Längslenker (36, 38) anvulkanisiertes Gummiauge (72) aufweist, welches zwischen zwei Gleitscheiben (66, 68) um eine an der Konsole (60) befestigte Achse (64) drehbar gelagert ist, und daß eine an der Konsole (74, 100) befestigte Achse (88, 106) zwei gegeneinander verspannte Gummi-Flansche (80, 82, 122, 124) aufnimmt, die den Längslenker (36, 38) tragen.

13. Fahrerplattformaufhängung nach einem der Ansprüche 1 bis 12, dadurch gekennzeichnet, daß die drehfesten Einspannungen (40, 46, 48, 54) zwischen dem Drehstab (26, 28, 30) und der Fahrerplattform (12) und/oder zwischen dem Drehstab (26, 28) und den Längslenkern (36, 38) lösbar ausgebildet sind, so daß sich die Längslenker (36, 38) ausgehend von der Schwenkachse (44) in etwa senkrecht nach oben aufstellen lassen, wobei die Fahrerplattform (12) angehoben wird.

14. Fahrerplattformaufhängung nach Anspruch 13, dadurch gekennzeichnet, daß zwischen einer zur Betätigung von Anbaugeräten vorhandenen Anhebevorrichtung (142, 144) des Fahrzeuges und der Fahrerplattform (12) ein Verbindungsgestänge (140) oder eine Übertragungsvorrichtung (148) vorgesehen ist, durch die sich die Fahrerplattform (12) anheben läßt.

## Claims

1. Driver's platform suspension for agricultural or industrial vehicles with at least one torsion bar (26, 28, 30) oriented essentially horizontally and transversely to the driving direction, which is arranged between the driver's platform (12) and the vehicle chassis (14) so that:
- a part segment of the torsion bar (26, 28, 30), in particular one of its ends or its central region is clamped to the driver's platform (12) in a non-rotatable manner,
- a bearing (24) is provided on the driver's platform (12) through which the torsion bar (26, 28, 30) is rotatably supported in the region of its at least one free end with respect to the clamping point and
- the at least one free end of the torsion bar (26, 28, 30) is clamped in a non-rotatable manner to the first end (34) of a longitudinal control arm (36, 38),
characterised in that at least in the forward region as well as in the rearward region of the driver's platform (12) there is arranged in each case at least one torsion bar (26, 28, 30) clamped in a non-rotatable manner to the driver's platform (12) to whose free end the first end (34) of a longitudinal control arm (36, 38) is clamped in a non-rotatable manner and that the second end (42) in each case of the longitudinal control arm (36, 38) is pivotably connected to the vehicle chassis (14) about a pivot axis (44) which is essentially parallel to the orientation of the torsion bar.

2. Driver's platform suspension according to claim 1 characterised in that at least one longitudinal control arm (36, 38) in each case is pivotably connected to the vehicle chassis (14) in the region of both longitudinal sides (16, 18) of the driver's platform (12) and that a torsion bar (26, 28) is clamped in a non-rotatable manner in each case to the first ends (34) of the longitudinal control arms (36, 38).

3. Driver's platform suspension according to claim 1 or 2, characterised in that in the region of each longitudinal side (16, 18) of the driver's platform (12) a forward and a rearward longitudinal control arm (36, 38) is arranged each supporting a torsion bar (26, 28, 30).

4. Driver's platform suspension according to claim 3, characterised in that the forward and rearward longitudinal control arms (36, 38) have different lengths.

5. Driver's platform suspension according to any of the claims 1 to 4, characterised in that the connecting line on the longitudinal control arm (36, 38) extending between the clamping point (40) of the torsion bar (26, 28, 30) and the pivat axis (44) assumes an angle to the horizontal between 0° and 30° during static loading.

6. Driver's platform suspension according to any of the claims 1 to 5, characterised in that the driver's platform (12) comprises two lateral frame parts (16, 18) oriented in the driving direction and that the bearing (24) engages to a lateral frame part (16, 18) and the torsion bar (26) is connected in a non-rotatable manner to the frame part (16, 18) located opposite.

7. Driver's platform suspension according to any of the claims 1 to 5, characterised in that the driver's platform (12) comprises at least one lateral frame part (16, 18) oriented in the driving direction and a central frame part (50) located in between, that the bearing (24) engages to the lateral frame part (16, 18) and that the torsion bar (28) is connected in a non-rotatable manner to the central frame part (50).

8. Driver's platform suspension according to any of the claims 1 to 5, characterised in tahat the driver's platform (12) comprises at least one lateral frame part (16, 18) oriented in the driving direction, that the bearing (24) engages to the lateral frame part (16, 18), that the torsion bar (30) extends through a torsion tube (52) and that the torsion tube (52) is connected in a non-rotatable manner by one of its ends to the frame part (16, 18) and by its other end to the torsion bar.

9. Driver's platform suspension according to any of the claims 1 to 8, characterised in that a further torsion bar (32) is provided oriented essentially horizontally and transversely to the driving direction which is clamped in a non-rotatable manner between the first ends (34) of two longitudinal control arms (38) arranged on opposite longitudinal sides of the driver's platform (12) with the second ends (42) of the longitudinal control arms (38) being pivotably connected to the vehicle chassis (14) around an axis (44) parallel to the orientation of the torsion bar, and that the torsion bar (32) is supported on the driver's platfom (12) through bearings (24) in the vicinity of each of the two longitudinal control arms (36, 38).

10. Driver's platform suspension according to any of the claims 1 to 9, characterised in that between the driver's platform (12) and the vehicle chassis (14) at least one Panhard rod (130) is arranged extending essentially transversely to the driving direction.

11. Driver's platform suspension according to any of the claims 1 to 10, characterised in that the connection constructed as pivot axis (44) between longitudinal control arms (36, 38) and a bracket (45, 47, 60, 74, 100) arranged on the vehicle chassis (14) is constructed with a silencing element.

12. Driver's platform suspension according to claim 11 characterised in that the silencing element comprises a rubber eye (72), vulcanised on to the longitudinal control arm (36, 38), which is rotatably mounted between two sliding disks (66, 68) about a spindle (64) fixed to the bracket (60), and that a spindle (88, 106) fixed to the bracket (74, 100) receives two rubber flanges (80, 82, 122, 124) braced against each other which support the longitudinal control arm (36, 38).

13. Driver's platform suspension according to any of the claims 1 to 12, characterised in that the non-rotating clampings (40, 46, 48, 54) between the torsion bar (26, 28, 30) and the driver's platform (12) and/or between the torsion bar (26, 28) and the longitudinal control arms (36, 38) are constructed detachably so that the longitudinal control arms (36, 38) proceeding from the pivot axis (44) can be set up approximately vertically upwards by which means the driver's platform (12) is raised.

14. Driver's platform suspension according to claim 13, characterised in that between a lifting device (142, 144) of the vehicle available for the manipulation of attachable appliances and the driver's platform (12) a connecting linkage (140) or a transmission device (148) is provided by means of which the driver's platform (12) can be raised.

## Revendications

1. Suspension de plate-forme de conducteur pour des véhicules agricoles ou industriels, comportant au moins une barre de torsion (26,28,30) qui s'étend essentiellement horizontalement et transversalement par rapport à la direction de déplacement et qui est disposée entre la plate-forme (12) du conducteur et le châssis (14) du véhicule, et dans laquelle
- une partie de la barre de torsion (26,28,30), notamment l'une de ses extrémités ou sa partie médiane, est ancrée avec blocage en rotation sur la plate-forme (12) du conducteur,
- sur la plate-forme (12) du conducteur est prévu un palier (24), sur lequel la barre de torsion (26,28,30) prend appui, de manière à pouvoir tourner, au niveau de l'une au moins de ses extrémités libres par rapport au point d'ancrage, et
- au moins l'extrémité libre de la barre de torsion (26,28, 30) est ancrée avec blocage en rotation, sur la première extrémité (34) d'un bras articulé longitudinal (36,38),
caractérisé en ce qu'au moins dans la partie avant ainsi que dans la partie arrière de la plate-forme (12) du conducteur est disposée respectivement au moins une barre de torsion (26,28,30), qui est ancrée avec blocage en rotation à la plate-forme (12) du conducteur et qu'à l'extrémité libre de laquelle est ancrée, avec blocage en rotation, la première extrémité (34) d'un levier oscillant longitudinal (36,38), et que la seconde extrémité respective (42) du levier oscillant longitudinal (36,38) est articulée sur le châssis (14) du véhicule, de manière à pouvoir basculer autour d'un axe de basculement (44) essentiellement parallèle a la direction de la barre de torsion.

2. Suspension de plate-forme de conducteur selon la revendication 1, caractérisée en ce que respectivement au moins un levier oscillant longitudinal (36, 38) est articulé sur la partie supérieure (14) du véhicule, dans la zone des deux côtés longitudinaux (16,18) de la plate-forme (12) du conducteur, et que respectivement une barre de torsion (26,28) est ancrée, avec blocage en rotation, sur la première extrémité (34) des leviers oscillants longitudinaux (36,38).

3. Suspension de plate-forme de conducteur selon la revendication 1 ou 2, caractérisée en ce que des leviers oscillants longitudinaux avant et arrière (36,38), qui portent chacun une barre de torsion (26,28,30), sont disposés au voisinage de chaque côté longitudinal (16,18) de la plate-forme (12) du conducteur.

4. Suspension de plate-forme de conducteur selon la revendication 3, caractérisée en ce que les leviers oscillants longitudinaux avant et arrière (26,38) possèdent des longueurs différentes.

5. Suspension de plate-forme de conducteur selon l'une des revendications 1 à 4, caractérisée en ce que la droite de liaison aboutissant au levier oscillant longitudinal (36,38) et qui s'étend entre le point d'ancrage (40) de la barre de torsion (26,28,30) et l'axe de basculement (44), fait un angle compris entre 0° et 30° par rapport à l'horizontale, dans le cas d'une suspension statique.

6. Suspension de plate-forme de conducteur selon l'une des revendications 1 à 5, caractérisée par le fait que la plate-forme (12) du conducteur comporte deux éléments de cadre latéraux (16,18) orientés dans la direction de déplacement et que le palier (24) attaque un élément de cadre latéral (16,18) et que la barre de torsion (26) est reliée avec blocage en rotation à l'élément de cadre latéral opposé (16,18).

7. Suspension de plate-forme de conducteur selon l'une des revendications 1 à 5, caractérisée par le fait que la plate-forme (12) du conducteur comporte au moins un élément de cadre latéral (16,18), dirigé dans la direction de déplacement, et un élément de cadre médian intercalé (50), que le palier (24) est raccordé à l'élément de cadre latéral (16,18) et que la barre de torsion (28) est reliée avec blocage en rotation à l'élément de cadre médian (50).

8. Suspension de plate-forme de conducteur selon l'une des revendications 1 à 5, caractérisée en ce que la plate-forme (12) du conducteur possède au moins un élément de cadre latéral (16,18) orienté dans la direction de déplacement, que le palier (24) est raccordé à l'élément de cadre latéral (16,18), que la barre de torsion (30) s'étend à travers un tube de torsion (52) et que le tube de torsion (52) est relié, avec blocage en rotation, par l'une de ses extrémités à l'élément de cadre (16,18) et par son autre extrémité à la barre de torsion (31).

9. Suspension de plate-forme de conducteur selon l'une des revendications 1 à 8, caractérisée en ce qu'il est prévu une autre barre de torsion (32), qui s'étend essentiellement horizontalement et est dirigée transversalement par rapport à la direction de déplacement et qui est ancrée, avec blocage en rotation, entre les premières extrémités (34) de deux leviers articulés longitudinaux (38) disposés sur des côtés longitudinaux opposés de la plate-forme (12) du conducteur, les deux extrémités (42) des leviers articulés (38) étant articulées sur le châssis (14) du véhicule de manière à pouvoir basculer autour d'un axe (44) parallèle à l'orientation de la barre de torsion, et que la barre de torsion (32) prend appui sur la plate-forme (12) du conducteur, au moyen de paliers (24), à proximité de chacun des deux leviers oscillants longitudinaux (36,38).

10. Suspension de plate-forme de conducteur selon l'une des revendications 1 à 9, caractérisée par le fait qu'au moins une barre Panhard (130), qui s'étend essentiel-lement transversalement par rapport à la direction de déplacement, est disposée entre la plate-forme (12) du conducteur et le châssis (14) du véhicule.

11. Suspension de plate-forme de conducteur selon l'une des revendications 1 à 10, caractérisée en ce que la liaison, réalisée sous la forme d'un axe de basculement (44), entre les leviers articulés (36,38) et une console (45,47,60,74,100) disposée sur la partie inférieure (14) du véhicule, est réalisée avec un élément de support élastique.

12. Suspension de plate-forme de conducteur selon la revendication 11, caractérisée en ce que l'élément de support élastique comporte un oeillet en caoutchouc (72) fixé par vulcanisation sur le levier oscillant longitudinal (36,38) et qui est monté entre deux coulisseaux (66,68) de manière à pouvoir tourner autour d'un axe (64) fixé à la console (60), et qu'un axe (88,106) fixé à la console (74, 100) loge deux brides en caoutchouc (80,82,122,124) serrée l'une contre l'autre et qui portent les leviers oscillants longitudinaux (36,38).

13. Suspension de plate-forme de conducteur selon l'une des revendications 1 à 12, caractérisée en ce que les ancrages (40,46,48,54) avec blocage en rotation entre la barre de torsion (26,28,30) et la plate-forme (12) du conducteur et/ou entre la barre de torsion (26,28) des leviers oscillants longitudinaux (36,38) sont agencés de manière à être amovibles de sorte que les leviers oscillants longitudinaux (36,38) peuvent être redressés approximativement verticalement à partir de l'axe de basculement (44), ce qui provoque le soulèvement de la plate-forme (12) du conducteur.

14. Suspension de plate-forme de conducteur selon la revendication 13, caractérisée en ce qu'entre un dispositif de levage (142,144) du véhicule, qui est présent pour actionner des équipements auxiliaires, et la plate-forme (12) du conducteur est prévue une tringlerie de liaison (140) ou un dispositif de transmission (148), qui permet de soulever la plate-forme (12) du conducteur.
